(19) Europäisches Patentamt

European Patent Office

Office européen des brevets

(11) **EP 0 619 183 B1**

(12) **EUROPÄISCHE PATENTSCHRIFT**

(45) Veröffentlichungstag und Bekanntmachung des Hinweises auf die Patenterteilung:
**03.12.2003 Patentblatt 2003/49**

(51) Int Cl.⁷: $B32B\ 27/32$, B65D 65/40, C08L 23/06, C08L 23/10

(21) Anmeldenummer: **94105031.2**

(22) Anmeldetag: **30.03.1994**

(54) **Opake, matte, biaxial orientierte Polypropylen-Mehrschichtfolie, Verfahren zu ihrer Herstellung und ihre Verwendung**

Opaque, matt, biaxially oriented polypropylene multilayered film, process for its manufacture and its use

Feuille en polypropylène multicouche, opaque, matte, orienté biaxialement, procédé pour sa fabrication et son utilisation

(84) Benannte Vertragsstaaten:
**BE DE ES FR GB IT NL**

(30) Priorität: **07.04.1993 DE 4311422**

(43) Veröffentlichungstag der Anmeldung:
**12.10.1994 Patentblatt 1994/41**

(73) Patentinhaber: **Trespaphan GmbH**
**66539 Neunkirchen (DE)**

(72) Erfinder:
• **Schuhmann, Detlef Erich, Dr.**
**D-65399 Kiedrich (DE)**
• **Wilhelm, Adolf**
**D-65199 Wiesbaden (DE)**
• **Murschall, Ursula, Dr.**
**D-55283 Nierstein (DE)**
• **Peiffer, Herbert, Dr..**
**D-55126 Mainz (DE)**
• **Kusch, Brigitte**
**D-66450 Baxbach (DE)**

(74) Vertreter: **Luderschmidt, Schüler & Partner GbR Patentanwälte,**
**Postfach 3929**
**65029 Wiesbaden (DE)**

(56) Entgegenhaltungen:

EP-A- 0 180 087   EP-A- 0 365 463
EP-A- 0 367 613   EP-A- 0 470 760
EP-A- 0 538 746   EP-A- 0 538 747
EP-A- 0 563 796

• **POLYMER SCIENCE Bd. 33, Nr. 12 , 1991 , BIRMINGHAM, AL ,US Seiten 2445 - 2452 N.N.KOMOVA 'The change in the properties of blends of polypropylene and high-density polyethylene during high-shear extrusion'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine opake Polypropylen-Mehrschichtfolie, welche eine Basisschicht, enthaltend Polypropylen oder eine Polypropylenmischung und Füllstoffe, und mindestens eine Propylenhomopolymer-, Propylencopolymer- oder eine Propylenterpolymerdeckschicht umfaßt, welche eine Mischung oder ein Blend zweier Komponenten I und II enthält.

Die Komponente I der Mischung bzw. des Blends ist ein Propylenhomopolymeres oder ein Copolymeres aus α-Olefinen mit 2 bis 10 Kohlenstoffatomen oder ein Terpolymeres aus α-Olefinen mit 2 bis 10 Kohlenstoffatomen oder eine Mischung aus zwei oder mehreren der genannten Homo-, Co- und Terpolymeren oder ein Blend aus zwei oder mehreren der genannten Homo-, Co- und Terpolymeren.

Die Komponente II der Mischung bzw. des Blends ist ein High Density Polyethylen (HDPE) mit einem Schmelzflußindex von größer 1 bis 50 g/10 min oder ein Blend aus HDPE mit einem Schmelzflußindex von größer 1 bis 50 g/10 min und einem oder mehreren weiteren Polymeren, ausgewählt aus der Gruppe Propylenhomopolymer, Copolymer aus α-Olefinen mit 2 bis 10 Kohlenstoffatomen, Terpolymer aus α-Olefinen mit 2 bis 10 Kohlenstoffatomen und ein Blend aus Co- und Terpolymeren aus α-Olefinen mit 2 bis 10 Kohlenstoffatomen.

Die erfindungsgemäße Deckschicht zeichnet sich durch eine charakteristische matte Oberfläche bzw. Optik aus.

Die Erfindung betrifft ferner ein Verfahren zur Herstellung der Mehrschichtfolie sowie ihre Verwendung.

Die deutsche Patentanmeldung P 41 35 096.0 offenbart Polyolefin-Mehrschichtfolien aus einer Polypropylen-Basisschicht und einer Deckschicht aus einem HDPE-Blend. Dieses HDPE-Blend besteht aus HDPE und Co- und/oder Terpolymeren aus α-Olefinen und gegebenenfalls Polypropylen. Die Deckschicht der Mehrschichtfolie weist einen minimalen Glanz und eine maximale Trübung auf, wodurch der Folie ein charakteristisches mattes Aussehen verliehen wird.

Aus der DE-A-16 94 694 sind Mehrschichtfolien bekannt, die aus biaxial orientierten Polypropylenfolien bestehen und mindestens eine heißsiegelfähige Schicht aus einem Ethylen-Propylen-Copolymeren enthalten. Diese Folien besitzen eine gute Heißsiegelbarkeit, sie sind klar und nicht im erwünschten Maße kratzfest und zeigen zudem ungenügende Verarbeitungseigenschaften auf schnellaufenden Verpackungsmaschinen.

Aus der EP-A-0 008 904 ist eine beidseitig siegelbare, biaxial orientierte dreischichtige Polyolefinfolie bekannt, bei der die Basisschicht aus Propylenpolymeren und die beiden Siegelschichten aus siegelbaren Olefinpolymeren gebildet sind. Diese Polyolefinfolie ist jedoch transparent und insbesondere nur wenig kratzfest und nicht bedruckbar. Darüber hinaus läßt sie auch hinsichtlich ihrer Gleiteigenschaften auf schnellaufenden Verpackungsmaschinen in verschiedener Weise zu wünschen übrig.

Eine weitere beidseitig siegelbare, biaxial orientierte Polyolefinfolie mit drei Schichten ist aus der US-A-4 419 411 bekannt. Bei diesen Folien ist in beiden Siegelschichten Polysiloxan und Siliciumdioxid als Additivkombination inkorporiert. Die Basisschicht besteht im wesentlichen aus Polypropylen und enthält eine geringe Menge Monocarbonsäureamid, welches teilweise von der Basisschicht in die beiden Siegelschichten migriert. Die beschriebene Polyolefin-Mehrschichtfolie soll einen besonders niedrigen Reibungskoeffizienten aufweisen. Dieser Folie haftet besonders der Nachteil an, daß sie nicht bedruckbar ist.

Aus der US-A-4 578 316 ist eine biaxial orientierte Polyolefin-Mehrschichtfolie bekannt, deren Basisschicht aus einem Polypropylen-Homopolymeren und deren Deckschicht aus einem Blend von Polypropylen und MDPE und/oder HDPE besteht. Diese Polyolefinfolie besitzt einen niedrigen Reibungskoeffizienten in Verbindung mit einer gut benetzbaren Oberfläche; jedoch weist auch dieser Film eine ausgezeichnete optische Transparenz auf.

In der WO 89/10839 werden Polyolefin-Mehrschichtfolien beschrieben, deren Basisschicht aus einem Propylenpolymeren und deren Deckschichten entweder aus HDPE oder einem Ethylen-Propylen-Copolymeren oder einem Polypropylen bestehen, wobei die Folie bei speziellen Temperaturbedingungen gestreckt wird. Sie besitzt insbesondere einen niedrigen Reibungskoeffizienten und eine gute Benetzbarkeit, aber gleichzeitig auch einen hohen Glanz und eine geringe Trübung.

Dem allgemeinen Stand der Technik ist zu entnehmen, daß für die unterschiedlichen Anwendungen der Polypropylenfolien unterschiedliche Eigenschaften und insbesondere spezielle Kombinationen der einzelnen Qualitätsmerkmale gefordert sind.

Die EP-A-0 367 613 offenbart eine Mehrschichtfolie aus einer vakuolenhaltigen Polypropylen-Basisschicht und einer Deckschicht, welche beschriftbar ist und ein erstes Polymer mit einem Schmelzflußindex von ≤ 1 g/10 min und ein zweites Polymeres enthält, welches mit dem besagten ersten Polymeren inkompatibel ist. Als Beispiel für das erste Polymer ist ein HDPE mit einer Dichte von 0,92 bis 0,97 g/cm$^3$ beschrieben. Das inkompatible Polymer ist ein Polypropylen oder Copolymere des Polypropylens oder Terpolymere des Polypropylens. Die beschriebene Folie hat ein opakes Aussehen, d. h. sie ist im wesentlichen lichtundurchlässig. Es ist beschrieben, daß die Folie ein mattes Aussehen bekommt, wenn sie mit einer Bedruckung versehen wird. Es ist bevorzugt, in die Deckschicht zusätzlich einen Füllstoff einzuarbeiten, welcher die Beschreibbarkeit verbessern soll, wobei gleichzeitig die SiO$_2$-haltige Deck-

schicht eine hohe Mattigkeit aufweist, die der Folie ein papierähnliches Aussehen verleiht. Die beschriebene Folie weist eine Dichte von 0,69 g/cm$^3$ auf. Die matte, SiO$_2$-haltige Oberfläche erweist sich bei der Bedruckung als verbesserungswürdig. Die Farbe zeigt einen Grauschleier und kein gleichmäßiges Erscheinungsbild. Dies wird auf Inhomogenitäten zurückgeführt, welche in der Folie selbst durch ihre Opazität nicht so stark erscheinen, aber beim Bedrucken herauskommen. Die bedruckten Folien sind fleckig und werden vom Verarbeiter nicht akzeptiert.

Die EP-A-0 470 760 bezieht sich auf eine dreischichtige, coextrudierte Folie aus einer vakuolenhaltige Basisschicht, die von zwei Deckschichten umgeben ist. Die Folie ist einseitig bedruckbar und enthält mindestens drei Polymere, von denen eines ein gummiartiges Polymer ist und mindestens ein weiteres teilweise unverträglich ist. Die äußere, bedruckbare Deckschicht ist frei von vakuoleninduzierenden Teilchen. Die beschriebene Folie ist als synthetisches Papier verwendbar.

Die Aufgabe der vorliegenden Erfindung bestand daher darin, eine Mehrschichtfolie zur Verfügung zu stellen, die durch ein mattes Erscheinungsbild mindestens einer Oberfläche gekennzeichnet ist. Der Glanz der Oberfläche/n soll im Hinblick auf diese gewünschte matte Charakteristik optimiert sein. Dabei ist gleichzeitig eine homogene Folienoptik ohne fleckige oder streifige Störstellen wichtig. Zusätzlich wird eine hohe und langzeitbeständige Oberflächenspannung der Deckschicht gefordert, damit deren gute Bedruckbarkeit gewährleistet ist. Gleichzeitig wird ein gleichmäßiges Erscheinungsbild der Bedruckung gefordert.

Je nach ihrem Verwendungszweck soll die Folie gegebenenfalls zusätzlich mindestens eine Deckschicht mit guten Siegeleigenschaften, insbesondere mit einem großen Siegelbereich und einer guten Heißsiegelbarkeit, aufweisen.

Zusätzlich werden für den gegebenenfalls vorgesehenen Einsatz auf schnelllaufenden Verpackungsmaschinen gute Laufeigenschaften und eine geringe Reibung gefordert.

Erfindungsgemäß wird diese Aufgabe gelöst durch eine Mehrschichtfolie, welche eine Basisschicht, die im wesentlichen Polypropylen oder eine Polypropylenmischung und Füllstoffe enthält und mindestens eine Propylenhomopolymer-, Propylencopolymeroder eine Propylenterpolymer-deckschicht umfaßt, welche eine Mischung oder ein Blend zweier Komponenten I und II enthält. Das Gewichtsverhältnis der Komponenten I und II liegt in einem Bereich von I:II = 30:70 und I:II = 70:30 und
die Komponente I ist ein

ein Propylenhomopolymeres oder
ein Copolymeres von

Propylen und Ethylen oder
Propylen und Butylen-1 oder

ein Terpolymeres von

Propylen und Ethylen und Butylen-1 oder

eine Mischung aus zwei oder mehreren der genannten Propylenhomo-, Propylenco- oder Propylenterpolymeren oder
ein Blend aus zwei oder mehreren der Propylenhomo-, Propylenco- oder Propylenterpolymeren, und

die Komponente II ist

ein HDPE mit einem MFI (50 N/190 °C) von größer 1 bis 50 g/10 min, gemessen nach DIN 53 735, oder
ein Blend zweier Blendkomponenten A und B, wobei

die Blendkomponente A ein HDPE mit einem MFI (50 N/190 °C) von größer 1 bis 50 g/10 min, gemessen nach DIN 53 735, ist und
die Blendkomponente B

ein Propylenhomopolymeres oder
ein Copolymeres von

Propylen und Ethylen oder
Propylen und Butylen oder

ein Terpolymeres von

Propylen und Ethylen und Butylen oder

eine Mischung aus zwei oder mehreren der genannten Propylenhomo-, Propylenco- oder Propylenterpolymeren oder

ein Blend aus zwei oder mehreren der Propylenhomo-, Propytencooder Propylenterpolymeren ist,

und die Folie matt ist.

Unter Mischungen im Sinne der vorliegenden Erfindung sind mechanische Mischungen zu verstehen, welche aus den Einzelkomponenten hergestelit werden. Im allgemeinen werden hierzu die einzelnen Bestandteile als gepreßte Formkörper kleiner Größe, z. B. linsen-, kugel- oder stäbchenförmiges Granulat, zusammengeschüttet und mit einer geeigneten Rüttelvorrichtung mechanisch gemischt.

Ein Blend im Sinne der vorliegenden Erfindung ist ein legierungsartiger Verbund der einzelnen Komponenten, welcher nicht mehr in die ursprünglichen Bestandteile zerlegt werden kann. Ein Blend weist Eigenschaften wie ein homogener Stoff auf und kann entsprechend durch geeignete Parameter charakterisiert werden.

Die Basisschicht der erfindungsgemäßen Mehrschichtfolie enthält im wesentlichen ein Propylenpolymer oder eine Polypropylenmischung und Füllstoffe.

Das Propylenpolymere der Basisschicht enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger stellen bevorzugte Propylenpolymere für die Basisschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Des weiteren ist eine Mischung aus den genannten Propylenhomo- und/oder -copolymeren und/oder anderen mit den Propylenpolymeren verträglichen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind verträgliche Polyethylene, insbesondere HDPE, LDPE und LLDPE, wobei der Anteil dieser Polyolefine jeweils 15 Gew.-%, bezogen auf die Polymermischung, nicht übersteigt. Verträglich im Sinne der vorliegenden Erfindung bedeutet, daß das verträgliche Polymere in der Folie nicht als separate Phase vorliegt.

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ =    Schmelzflußindex des Propylenpolymeren vor dem Zusatz des organischen Peroxids

MFI$_2$ =    Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Polypropylen-Basisschicht enthält Füllstoffe im allgemeinen in einer Menge von 1 bis 30 Gew.-%, welche die Folie opak machen. "Opake Folie" bedeutet im Sinne der vorliegenden Erfindung eine undurchsichtige Folie, deren Lichtdurchlässigkeit (ASTM-D 1003-77) höchstens 50 %, vorzugsweise höchstens 70 %, beträgt.

Von dem Begriff "Füllstoffe" werden im Sinne der vorliegenden Erfindung vakuoleniniziierende feste Teilchen, im folgenden "feste Teilchen" genannt, und Pigmente umfaßt. Feste Teilchen sind mit der Polymermatrix unverträglich und führen beim Verstrecken der Folien zur Bildung von vakuolenartigen Hohlräumen, wobei Größe, Art und Anzahl der Vakuolen von der Größe der festen Teilchen und den Streckbedingungen wie Streckverhältnis und Strecktemperatur abhängig sind. Die Vakuolen geben den Folien ein charakteristisches perlmuttartiges, opakes Aussehen, welches durch Lichtstreuung an den Grenzflächen "Vakuole/Polymermatrix" entsteht. Die Lichtstreuung an den festen Teilchen selbst trägt zur Opazität der Folie im allgemeinen vergleichsweise wenig bei. In der Regel haben feste Teilchen eine Mindestgröße von 1 µm, um zu einer effektiven, d. h. opak machenden Menge an Vakuolen zu führen. Im allgemeinen beträgt der mittlere Teilchendurchmesser der festen Teilchen 1 bis 6 µm, vorzugsweise 1,5 bis 5 µm. Der chemische Charakter der festen Teilchen spielt eine untergeordnete Rolle.

Pigmente sind ebenfalls mit der Polymermatrix unverträglich und umfassen solche Füllstoffe, die kaum zur Vakuolenbildung beim Verstrecken führen. Die färbende Wirkung der Pigmente wird durch die Teilchen selbst verursacht. Der Begriff "Pigment" ist im allgemeinen an eine Teilchengröße von 0,01 bis maximal 1 µm gebunden und umfaßt sowohl sogenannte "Weißpigmente", welche die Folien weiß einfärben, als auch "Buntpigmente", welche der Folie eine bunte oder schwarze Farbe verleihen. Im allgemeinen liegt der mittlere Teilchendurchmesser der Pigmente im Bereich von 0,01 bis 1 µm, vorzugsweise 0,01 bis 0,5 µm.

Somit ist die Unterteilung der Füllstoffe in die beiden Gruppen "feste Teilchen" und "Pigmente" eine Klassifizierung nach ihrer Funktionalität, die u. a. von der Teilchengröße abhängig ist. Feste Teilchen machen Folien durch Vakuolenbildung opak. Pigmente färben die Folie und machen sie dadurch undurchsichtig. Beide Teilchenarten werden unter dem Oberbegriff "Füllstoffe" zusammengefaßt.

Übliche Füllstoffe der Basisschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Füllstoffmenge der Basisschicht liegt im allgemeinen im Bereich von 1 bis 30 Gew.-%, wobei die einzelnen Ausführungsformen je nach Einsatzzweck der Folie oder aktuellem Modetrend nur feste Teilchen oder nur Pigmente oder eine Kombination aus festen Teilchen und Pigmenten in der Basisschicht enthalten können.

Folien, welche nur mit Pigment ausgerüstet sind (pigmentierte Folien), enthalten dieses im allgemeinen in einer Menge von 2 bis 25 Gew.-%, insbesondere 3 bis 20 Gew.-%, bevorzugt 5 bis 15 Gew.-%, jeweils bezogen auf die Basisschicht. Als Pigmente sind Weißpigmente, insbesondere $TiO_2$ und $BaSO_4$ bevorzugt. $TiO_2$ hat bevorzugt einen mittleren Teilchendurchmesser von 0,01 bis 0,7 µm, insbesondere 0,01 bis 0,4 µm.

Folien, welche nur mit vakuoleniniziierenden festen Teilchen ausgerüstet sind, enthalten diese im allgemeinen in einer Menge von 1 bis 25 Gew.-%. Für übliche Verpackungsfolien ist ein Gehalt an festen Teilchen von 2 bis 5 Gew.-% bevorzugt. Für spezielle Anwendungen, z. B. Folien für Etiketten, werden auch hochgefüllte Folien mit 9 bis 14 Gew.-% festen Teilchen bevorzugt. Als vakuoleniniziierende Teilchen sind $CaCO_3$, $SiO_2$, Polyamide und Polybutylenterephthalate bevorzugt. Besonders vorteilhaft ist $CaCO_3$, insbesondere $CaCO_3$ einer mittleren Teilchengröße von 2 bis 5 µm.

Folien, welche mit vakuoleniniziierenden festen Teilchen und mit Pigment ausgerüstet sind, enthalten feste Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%. Für solche Folientypen ist eine Kombination aus $CaCO_3$ als feste Teilchen und $TiO_2$ als Pigment bevorzugt. Dieser Folientyp wird auch als opak-weiße Folie bezeichnet.

Die Dichte der füllstoffhaltigen Folien kann innerhalb weiter Grenzen variieren und hängt von der Art und der Menge der Füllstoffe ab. Die Dichte liegt im allgemeinen im Bereich von 0,4 bis 1,1 g/cm$^3$.

Pigmentierte Folien haben eine Dichte in der Größenordnung von 0,9 g/cm$^3$ oder darüber, da die Pigmente nahezu keine dichtereduzierenden Vakuolen erzeugen, aber selbst eine höhere Dichte als Polypropylen haben können. Bevorzugt liegt die Dichte dieses Folientyps im Bereich von 0,9 bis 1,1 g/cm$^3$.

Folien, welche nur feste Teilchen enthalten, haben durch die Vakuolen eine gegenüber Polypropylen reduzierte Dichte von kleiner 0,9 g/cm$^3$. Für Verpackungsfolien mit einem herkömmlichen Gehalt an festen Teilchen von 2 bis 5 Gew.-% liegt die Dichte im Bereich von 0,7 bis 0,85 g/cm$^3$. Für hochgefüllte Folien mit einem Gehalt an festen Teilchen von 9 bis 14 Gew.-% liegt die Dichte im Bereich von 0,4 bis 0,7 g/cm$^3$.

Folien, welche Pigmente und feste Teilchen enthalten, insbesondere weiß-opake Folien, haben eine Dichte im Bereich von 0,6 bis 0,85 g/cm$^3$, je nach Verhältnis von Pigmentgehalt zu Gehalt an festen Teilchen.

Bevorzugte Ausführungsformen der pigmentierten Folien enthalten $TiO_2$ als Weißpigment. Ebenso ist $TiO_2$ für weiß-opake Folientypen bevorzugt. Die Titandioxidteilchen bestehen zu mindestens 95 Gew.-% aus Rutil und werden bevorzugt mit einem Überzug aus anorganischen Oxiden eingesetzt, wie er üblicherweise als Überzug für $TiO_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der

wäßrigen Suspension ausgefällt. TiO$_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den TiO$_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, jeweils bezogen auf 100 g TiO$_2$-Teilchen, enthalten. Als besonders vorteilhaft hat es sich erwiesen, wenn die TiO$_2$-Teilchen mit Al$_2$O$_3$ oder mit Al$_2$O$_3$ und Polydimethylsiloxan beschichtet sind.

Weiterhin kann die Basisschicht gegebenenfalls ein niedermolekulares Harz enthalten, dessen Anteil 1 bis 30 Gew.-%, vorzugsweise 2 bis 10 Gew.-%, beträgt. Der Erweichungspunkt des Harzes liegt zwischen 130 und 180 °C (gemessen nach DIN 1995-U4, entspricht ASTM E-28), vorzugsweise zwischen 140 und 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Mindestens eine Deckschicht der erfindungsgemäßen Mehrschichtfolie enthält eine im folgenden näher beschriebene Mischung bzw. ein Blend zweier Komponenten I und II und gegebenenfalls zugesetzte Additive.

Die Komponente I der Deckschichtmischung bzw. des Blends enthält im wesentlichen

ein Propylenhomopolymer oder
ein Copolymer von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

ein Terpolymer von

Ethylen und Propylen und Butylen oder
Ethylen und Propylen und einem anderen α-Olefin mit 5 bis 10 Kohlenstoffatomen oder

eine Mischung aus zwei oder mehreren der genannten Homo-, Co- und Terpolymeren oder
ein Blend aus zwei oder mehreren der genannten Homo-, Co- und Terpolymeren, gegebenenfalls gemischt mit einem oder mehreren der genannten Homo-, Co- und Terpolymeren.

Besonders bevorzugt besteht die Komponente I im wesentlichen aus

einem Propylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Komponente I eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Komponente I bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Die Komponente II der Deckschichtmischung bzw. des Blends enthält im wesentlichen ein HDPE mit einem MFI (50 N/90 °C) von größer 1 bis 50 g/10 min, gemessen nach DIN 53 735, oder ein Blend, welches im wesentlichen HDPE mit einem MFI (50 N/190 °C) von größer 1 bis 50 g/10 min, gemessen nach DIN 53 735, als Blendkomponente A und eine Blendkomponente B umfaßt.

Unter HDPE werden im Sinne der vorliegenden Erfindung Hochdruckpolyethylene verstanden, welche die folgenden Eigenschaften aufweisen:

1. Der Schmelzflußindex MFI, gemessen nach DIN 53 735 oder ISO 1133 bei 50 N/190 °C, liegt im Bereich von größer 1 bis 50 g/10 min, vorzugsweise 5 bis 45 g/10 min, insbesondere 5 bis 25 g/10 min.
2. Die Viskositätszahl, gemessen nach DIN 53 728, Teil 4, oder ISO 1191, liegt im Bereich von 100 bis 450 cm$^3$/g, vorzugsweise 120 bis 280 cm$^3$/g.
3. Die Kristallinität beträgt 35 bis 80 %, vorzugsweise 50 bis 80 %.
4. Die Dichte, gemessen bei 23 °C nach DIN 53 479, Verfahren A, oder ISO 1183, liegt im Bereich von 0,93 bis 0,97 g/cm$^3$, vorzugsweise 0,95 bis 0,96 g/cm$^3$.
5. Der Schmelzpunkt, gemessen mit DSC (Maximum der Schmelzkurve, Aufheizgeschwindigkeit 20 °C/min), liegt zwischen 120 und 150 °C, vorzugsweise zwischen 125 und 135 °C).

Das HDPE als Komponente II als auch HDPE als Blendkomponente A wird aus den vorstehend beschriebenen Polyethylenen ausgewählt, so daß als Komponente II grundsätzlich das gleiche HDPE wie als Blendkomponente A in Frage kommt, aber nicht identisch sein muß. Es ist jedoch erfindungswesentlich, daß das in der Deckschicht enthaltene HDPE einen MFI von größer 1 bis 50 g/10 min (50 N/190 °C), gemessen nach DIN 53 735, hat.

Die Blendkomponente B besteht im wesentlichen aus

einem Propylenhomopolymeren oder aus
einem Copolymeren von

Ethylen und Propylen oder
Ethylen und Butylen oder
Propylen und Butylen oder

Ethylen und einem anderen α-Olefin mit 5 bis 10 Kohlenstoffatomen oder
Propylen und einem anderen α-Olefin mit 5 bis 10 Kohlenstoffatomen oder aus

einem Terpolymeren von

Ethylen und Propylen und Butylen oder
Ethylen und Propylen und einem anderen α-Olefin mit 5 bis 10 Kohlenstoffatomen oder aus

einer Mischung aus zwei oder mehreren der genannten Homo-, Co- und Terpolymeren oder aus
einem Blend aus zwei oder mehreren der genannten Homo-, Co- und Terpolymeren.

Besonders bevorzugt besteht die Blendkomponente B im wesentlichen aus

einem Propylenhomopolymeren oder aus
einem Copolymeren von

Ethylen und Propylen oder
Ethylen und Butylen-1 oder
Propylen und Butylen-1 oder aus

einem Terpolymeren von

Ethylen und Propylen und Butylen-1 oder aus

einer Mischung aus zwei oder mehreren der genannten besonders bevorzugten Homo-, Co- und Terpolymeren oder aus
einem Blend aus zwei oder mehreren der genannten besonders bevorzugten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,
jeweils bezogen auf das Gesamtgewicht des Polymerblends,

bevorzugt sind.

Das als oder in der Blendkomponente B eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Blendkomponente B bzw. das in dieser enthaltene Homopolymere hat im allgemeinen einen Schmelzflußindex von 0,5 g/10 min bis 15 g/10 min, vorzugsweise 1,5 g/10 min bis 6 g/10 min, bei 230 °C und einer Kraft von 21,6 N (DIN 53 735).

Das Verhältnis (Gewichtsverhältnis) der beiden Blendkomponenten A und B liegt zwischen A:B = 20:80 und A:B = 80:20, vorzugsweise zwischen A:B = 40:60 und A:B = 60:40, und liegt insbesondere bevorzugt bei A:B = 45:55.

Das Blend aus den Komponenten A und B hat einen Schmelzflußindex (DIN 53 735 bei 230 °C und 21,6 N Belastung) von 1,5 g/10 min bis 12 g/10 min, vorzugsweise von 2,5 g/10 min bis 6 g/10 min, wobei der Schmelzflußindex des Blends bevorzugt höher liegt als jener des Propylenpolymeren der Basisschicht.

Der Schmelzbereich des Blends liegt zwischen 100 und 160 ° C, vorzugsweise zwischen 120 und 150 °C.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II = 10:90 bis I:II = 90:10, vorzugsweise zwischen I:II = 30:70 bis I:II = 70:30, insbesondere bei I:II = 50:50.

Die vorstehend beschriebene Deckschicht der erfindungsgemäßen Mehrschichtfolie kann in einer weiteren Ausführungsform zusätzlich Füllstoffe, d. h. feste Teilchen und/oder Pigmente, enthalten, weiche mit der Deckschichtmischung bzw. dem Blend unverträglich sind.

Der Zusatz dieser Füllstoffe in der Deckschicht führt in der Regel nicht zur Ausbildung von vakuolenartigen Hohlräumen. Das heißt, die füllstoffhaltige Deckschicht ist im wesentlichen vakuolenfrei. Für homopolymerhaltige Deckschichten mit Füllstoffen ist der Anteil an Homopolymer entsprechend gering zu halten, insbesondere, wenn feste Teilchen mit einem mittleren Teilchendurchmesser von > 1 µm enthalten sind. Der Homopolymeranteil sollte in diesem Fall 25 Gew.-% nicht überschreiten und liegt vorzugsweise im Bereich von 5 bis 20 Gew.-%, jeweils bezogen auf die Deckschicht. Für füllstoffhaltige Deckschichten mit einem Homopolymeranteil von über 25 Gew.-%, bezogen auf die Deckschicht, müssen Füllstoffe mit entsprechend kleinem mittlerem Teilchendurchmesser ausgewählt werden, d. h. diese Deckschichten enthalten bevorzugt im wesentlichen nur Pigmente.

Als Füllstoffe für die erfindungsgemäße Deckschicht kommen grundsätzlich die vorstehend für die Basisschicht beschriebenen Füllstoffarten in Frage, d. h. sowohl die festen Teilchen mit einem mittleren Teilchendurchmesser von > 1 µm, welche in der Deckschicht jedoch im wesentlichen keine Vakuolen erzeugen und/oder die Pigmente, deren mittlerer Teilchendurchmesser im allgemeinen 0,01 bis 1 µm beträgt. Wie vorstehend für die Basisschicht beschrieben können auch der Deckschicht grundsätzlich nur feste Teilchen oder nur Pigmente oder feste Teilchen und Pigmente in Kombination zugesetzt werden.

Übliche Füllstoffe der Deckschicht sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid und Titandioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Polyester, Polystyrole, Polyamide, halogenierte organische Polymere, wobei Polyester wie beispielsweise Polybutylenterephthalate bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Für bevorzugte Ausführungsformen, welche TiO$_2$ enthalten, wird das vorstehend für die Basisschicht beschriebene verwendet.

Die Füllstoffmenge der Deckschicht beträgt bis zu 15 Gew.-% und liegt im allgemeinen in einem Bereich von 1 bis 10 Gew.-%, vorzugsweise im Bereich von 3 bis 9 Gew.-%, jeweils bezogen auf die Deckschicht.

Folien, welche nur mit Pigment in der Deckschicht ausgerüstet sind, enthalten dieses im allgemeinen in einer Menge von 1 bis 15 Gew.-%, insbesondere 1 bis 12 Gew.-%, bevorzugt 3 bis 9 Gew.-%, jeweils bezogen auf die Deckschicht. Als Pigmente sind Weißpigmente, insbesondere TiO$_2$ und BaSO$_4$ bevorzugt. TiO$_2$ hat bevorzugt einen mittleren Teilchendurchmesser von 0,01 bis 0,7 µm, insbesondere 0,01 bis 0,4 µm.

Folien, welche nur mit festen Teilchen in der Deckschicht ausgerüstet sind, enthalten diese im allgemeinen in einer Menge von 1 bis 15 Gew.-%, vorzugsweise von 1 bis 10 Gew.-%, jeweils bezogen auf die Deckschicht. Als feste Teilchen sind CaCO$_3$, SiO$_2$, Polyamide und Polybutylenterephthalate bevorzugt. Besonders vorteilhaft ist CaCO$_3$, insbesondere CaCO$_3$ einer mittleren Teilchengröße von 1 bis 5 µm.

Folien, welche mit festen Teilchen und mit Pigment in der Deckschicht ausgerüstet sind, enthalten feste Teilchen in einer Menge von 1 bis 10 Gew.-%, bevorzugt 1 bis 5 Gew.-%, und Pigment in einer Menge von 1 bis 7 Gew.-%, bevorzugt 1 bis 5 Gew.-%. Für solche Folientypen ist eine Kombination aus CaCO$_3$ als feste Teilchen und TiO$_2$ als Pigment bevorzugt.

Die erfindungsgemäße Mehrschichtfolie umfaßt zumindest die vorstehend beschriebene Basisschicht und mindestens eine matte Deckschicht, welche die vorstehend beschriebene Mischung enthält. Je nach ihrem vorgesehenen Verwendungszweck kann die Mehrschichtfolie eine weitere Deckschicht auf der gegenüberliegenden Seite aufweisen. Gegebenenfalls kann/können auch eine oder mehrere Zwischenschicht/en zwischen der Basis- und der/den Deckschicht/en aufgebracht werden.

Bevorzugte Ausführungsformen der Mehrschichtfolie sind dreischichtig. Aufbau, Dicke und Zusammensetzung einer zweiten Deckschicht können unabhängig von der bereits vorhandenen erfindungsgemäßen matten Deckschicht gewählt werden, wobei die zweite Deckschicht ebenfalls eine der vorstehend beschriebenen Mischungen enthalten kann, welche aber nicht mit der der ersten Deckschicht identisch sein muß. Die zweite Deckschicht kann jedoch auch jedes andere gängige Deckschichtpolymer enthalten.

Die Dicke der Deckschicht/en ist größer als 0,4 μm und liegt vorzugsweise im Bereich von 0,8 bis 4 μm, insbesondere 1 bis 3 μm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 120 μm, insbesondere 10 bis 100 μm, wobei die Basisschicht etwa 50 bis 95 % der Gesamtfoliendicke ausmacht.

Zur Verbesserung der Hafteigenschaften der Deckschicht/en ist mindestens eine Oberfläche der Folie corona- oder flammbehandelt, wobei gegebenenfalls die entsprechende Behandlung an beiden Oberflächen vorgenommen werden und gleich oder verschieden sein kann.

Es wurde gefunden, daß bei Einarbeitung der oben beschriebenen Polyethylene mit einem MFI von größer 1 bis 50 g/10 min (50 N/190 °C) in eine Propylenhomopolymer-, Propylencopolymer- bzw. Propylenterpolymer-Deckschicht überraschenderweise eine sehr homogene Folienoptik mit der gewünschten matten Charakteristik erzielt werden konnte. Dieses Ergebnis überraschte umsomehr als Versuche ausgehend von der EP-A-0 367 613 nicht das erwünschte Ergebnis lieferten. Bei der Nacharbeitung der Beispiele wurde eine Folie erhalten, die ein fleckiges Aussehen hatte. Die Glanzwerte waren ungleichmäßig, und nach der Bedruckung zeigten die Folien ein ungleichmäßiges Druckbild und einen Grauschleier der Farben.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-$(C_1\text{-}C_4)$-alkyl-Gruppen substituiert sind, wobei N,N-bis-(2-hydroxyethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,3 Gew.-%. Des weiteren wird Glycerinmonostearat in einer Menge von 0,03 % bis 0,2 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,5 Gew.-%. Die mittlere Teilchengröße liegt zwischen 1 und 6 μm, insbesondere 2 und 5 μm, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid. Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 mm$^2$/s. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat und/oder synthetisches Dihydrotalcit (SHYT) einer mittleren Teilchengröße von höchstens 0,7 μm, einer absoluten Teilchengröße von kleiner 10 μm und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 8:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 140 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, durch einen Heiz- und Kühlkreislauf bei einer Temperatur von 20 bis 100 °C, vorzugsweise 40 bis 90 °C, zu halten.

Die Temperaturen, bei denen Längs- und Querstreckung durchgeführt werden, können in einem relativ großen Bereich variieren und richten sich nach der jeweiligen Zusammensetzung der Deckschichtmischung und nach den gewünschten Eigenschaften der Folie bzw. der Basisschicht wie z. B. Opazität, Weißgrad, Dicke, Dichte usw. Im allgemeinen wird die Längsstreckung vorzugsweise bei 120 bis 150 °C und die Querstreckung vorzugsweise bei 155 bis 190 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 42 mN/m, vorzugsweise 39 bis 40 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 10 bis 20 kV und 20 bis 40 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 500 und 3 000 V, vorzugsweise liegt sie im Bereich von 1 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Die erfindungsgemäße Mehrschichtfolie zeichnet sich durch eine sehr homogene Folienoptik und ein charakteristisches mattes Aussehen aus.

Die optimierte matte Oberfläche erzeugt ein papierähnliches Erscheinungsbild der Folie, welches im Verpackungsbereich für bestimmte Anwendungen besonders wünschenswert ist. Überraschenderweise hat sich erwiesen, daß nicht allein die Minimierung von Glanz den gewünschten optischen Effekt bringt, sondern daß vielmehr eine ausgewogene Optimierung der Eigenschaften erforderlich ist, welche durch die spezielle Deckschichtzusammensetzung gemäß Anspruch 1 überraschenderweise möglich ist.

Die Anforderung "matte, papierähnliche Erscheinung" wird dann besonders gut erfüllt, wenn die Glanzwerte der Folie unter 80 (ASTM-D 523-78), vorzugsweise im Bereich von 10 bis 65, liegen (Meßwinkel 85°).

Gleichzeitig weist die Mehrschichtfolie eine hervorragende Bedruckbarkeit und ein besonders gleichmäßiges einwandfreies Druckbild auf. Die Farben sind klar und ohne Grauschleier. Es treten auch bei der bedruckten Folie keine Flecken oder sonstigen Störstellen auf. Die Oberflächenspannung ist überraschend hoch und fällt auch nach einer mehrmonatigen Lagerzeit nur unwesentlich ab. Des weiteren weisen die erfindungsgemäßen Folien ausgesprochen ungewöhnliche Siegeleigenschaften auf. Diese lassen sich individuell auf das jeweilige Problem und die vorgesehene Anwendung einstellen. Diese Flexibilität eröffnet einen außerordentlich breiten Anwendungsbereich des gleichen Materials in den verschiedensten Gebieten. Durch Auswahl der einzelnen Komponenten für die Deckschichtmischung und deren Verhältnis lassen sich die Siegelanspringtemperaturen, die über einen großen Bereich variieren können, gezielt einstellen. Ebenso variabel ist die Siegelnahtfestigkeit, welche für viele Anwendungen eher groß sein soll. Jedoch ist die erfindungsgemäße Folie auch für neue Einsatzzwecke vorgesehen, bei denen eine große Siegelnahtfestigkeit nachteilig ist. Beispielsweise werden herkömmliche Deckelverschlüsse aus Aluminium zunehmend durch andere Materialien ersetzt, um durch einheitliche Verpackungen aus einer Stoffklasse deren Recyclingfähigkeit zu verbessern. Diese Deckel werden mit dem zu verschließenden Gefäß versiegelt und sollen anschließend wieder problemlos zu öffnen sein. Für diese Zwecke ist eine geringere Siegelnahtfestigkeit gefordert. Zusätzlich weist die Folie eine gute Barrierewirkung gegenüber Wasserdampf und anderen Gasen auf. Diese Eigenschaft ist für die Verwendung als Deckelverschlußmaterial besonders wichtig, um das enthaltene Gut wirksam vor Feuchtigkeitsverlusten und Austrocknung zu schützen.

Zusammenfassend ist festzustellen, daß sich die erfindungsgemäße Mehrschichtfolie durch eine Vielzahl vorteilhafter Eigenschaften auszeichnet, insbesondere durch

- einen charakteristischen matten Glanz von kleiner 80 bei einem Meßwinkel von 85° (ASTM-D-523-78),
- eine sehr gute Bedruckbarkeit,
- eine besonders gleichmäßige Folienoptik, insbesondere der bedruckten Folie
- eine große Rauhigkeit der Oberfläche,
- einen 'relativ' kleinen Reibungskoeffizienten,
- eine gute Wasserdampf- und Gasbarriere,
- eine hohe Oberflächenspannung,
- eine gute Langzeitbeständigkeit der Oberflächenspannung und
- ungewöhnliche Siegelnahteigenschaften, d. h. insbesondere gezielt einstellbare Siegelanspring temperaturen und Siegelnahtfestig keiten.

Durch diese überraschende Vielzahl ausgezeichneter Eigenschaften wird erfindungsgemäß eine Folie zur Verfügung gestellt, welche sich für verschiedenste Verwendungszwecke gleichermaßen hervorragend einsetzen läßt, insbesondere als werbewirksame Mattkaschierfolie oder als opake Verpackungsfolie auf schnellaufenden Verpackungsmaschinen oder als neuartiges Deckelverschlußmaterial oder als opake Zigaretteneinschlagfolie oder als opake Folie für den Etikettierprozeß wie z. B. in-mould-labelling.

Darüber hinaus ist die Folie ausgezeichnet als Trägerfolie für Klebebänder (langzeitbeständige, hohe Oberflächenspannung) oder als Trägerfolie für wäßrige Barrierebeschichtungssysteme, z. B. auf Basis von wäßrigen Dispersionen von Polyvinylidenchlorid- oder Ethylenvinylalkohol-Copolymeren zu verwenden. Sie läßt sich für verschiedene Zwecke mit wäßrigen Druckfarben bedrucken und weist dabei eine hervorragende Kurz- und Langzeitbedruckbarkeit auf. Aufgrund ihrer guten Sofort- und Langzeitbeschichtbarkeit eignet sich die Folie auch für die Herstellung von Kunststoffetiketten, insbesondere solchen, welche im In-Mould-Labelling-Prozeß verwendet werden. Des weiteren ist die Folie für die Herstellung von Laminaten mit Papier, Pappe, Metallen, metallisierten Kunststoffolien und Kunststoffolien geeignet.

Die Erfindung wird nun anhand von Ausführungsbeispielen noch näher erläutert.

**Beispiel 1**

Nach dem Coextrusionsverfahren wurde aus einer Breitschlitzdüse bei einer Extrusionstemperatur von 260 °C als Summe eine 1,1 mm dicke Dreischichtfolie mit einem Schichtaufbau ABD extrudiert, d. h. die Basisschicht B war von zwei unterschiedlichen Deckschichten A und D umgeben. Die Deckschicht D wurde coronabehandelt.

Die wesentlichen Komponenten der Basisschicht waren:

| 92,6 Gew.-% | Propylenhomopolymerisat (PP) mit einem n-heptanlöslichen Anteil von 4,5 Gew.-% (bezogen auf 100 % PP) und einem Schmelzpunkt von 165 °C; der Schmelzflußindex des Propylenhomopolymeren liegt bei 3,2 g/10 min bei 230 °C und 21,6 N Belastung (DIN 53 735); |
|---|---|
| 4,2 Gew.-% | CaCO$_3$ des Typs ®Omyalithe 90T, Lieferant für Masterbatche Firma Multibase, Z.I. du Giers, F-38380 Saint-Laurent-du Pont, Frankreich; |
| 3,2 Gew.-% | TiO$_2$ über Masterbatch ®P 8555 LM, Lieferant Firma Schulman GmbH, Hüttenstraße 211, D-5014 Kerpen 3. |

Die Deckschicht der D-Seite bestand aus einer Mischung zweier Komponenten, nämlich Terpolymer aus Ethylen-, Propylen- und Butylen-1-Einheiten mit einem Ethylengehalt von 1,9 Gew.-% und einem Butylen-1-Gehalt von 8,4 Gew.-%, bezogen auf das Terpolymer, sowie aus einem HDPE mit einem MFI (50 N/190 °C) von 11 g/10 min (gemessen nach DIN 53 735), einer Viskositätszahl von 160 cm$^3$/g (gemessen nach DIN 53 728, Teil 4), einer Dichte von 0,954 g/cm$^3$ (gemessen nach DIN 53 479, Verfahren A), einem Kristallisationsgrad von 68 % und einem Schmelzpunkt von 132 °C nach DSC-Messung. Der Anteil beider Komponenten an der Zusammensetzung der Deckschicht betrug je 50 Gew.-%.

Beide Komponenten wurden vor der Verarbeitung im Extruder im Verhältnis 1:1 2 min lang bei 500 Upm in einem Henschel-Mischer mechanisch gemischt, so daß eine homogene Granulatmischung resultierte.

Die Deckschicht der A-Seite bestand aus einem statistischen Ethylen-Propylen-Copolymeren mit einem Ethylengehalt von 5 Gew.-%, bezogen auf das Gewicht des Copolymeren. Der Schmelzpunkt des Copolymeren lag bei 134 °C, wobei der Schmelzflußindex 7,0 g/10 min betrug.

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat. Die Basisschicht enthielt weiterhin 0,15 Gew.-% an N,N-bis(2-hydroxyethyl)-($C_{10}$-$C_{20}$)-alkylamin (®Armostat 300) als Antistatikum.

Die extrudierte Dreischichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion | Extrusionstemperatur 260 °C |
| | Temperatur der ersten Abzugswalze 50 °C |
| | Temperatur des Walzentrios 50 ° C |
| Längsstreckung | Streckwalze T = 125 °C |
| | Längsstreckung um den Faktor 5 |
| Querstreckung | Aufheizfelder T = 175 °C |
| | Streckfelder T = 165 °C |
| | Querstreckung um den Faktor 10 |
| Fixierung | Temperatur T = 155 °C |
| Coronabehandlung | Spannung : 10 000 V |
| | Frequenz :10 000 Hz |

Die so hergestellte Mehrschichtfolie wies direkt nach der Herstellung eine Oberflächenspannung von 40 bis 41 mN/m auf (D-Seite). Die Folie war ca. 24 μm dick, wobei die Dicke der A-Seite etwa 0,9 μm, die der D-Seite etwa 2 μm und die der Basisschicht 21,1 μm betrug.

**Beispiel 2**

Beispiel 1 wurde wiederholt. Die Rezeptur der Deckschicht der D-Seite wurde modifiziert. Die Zusammensetzung sah aus wie folgt:

| | |
|---|---|
| 43,7 Gew.-% | des in Beispiel 1 genannten Terpolymeren der D-Seite |
| 43,7 Gew.-% | des in Beispiel 1 genannten HDPE der D-Seite |
| 7,0 Gew.-% | des in Beispiel 1 genannten $TiO_2$ der Basisschicht |
| 5,6 Gew.-% | des in Beispiel 1 genannten Propylenhomopolymeren der Basisschicht. |

**Beispiel 3**

Beispiel 1 wurde wiederholt. Die Rezeptur der Deckschicht der D-Seite wurde modifiziert. Die Zusammensetzung sah aus wie folgt:

| | |
|---|---|
| 50 Gew.-% | des in Beispiel 1 genannten HDPE der D-Seite |
| 50 Gew.-% | des in Beispiel 1 genannten Propylenhomopolymeren der Basisschicht |

**Beispiel 4**

Beispiel 1 wurde wiederholt. Die Rezeptur der Deckschicht der D-Seite wurde wie folgt modifiziert:

| | |
|---|---|
| 50 Gew.-% | des in Beispiel 1 genannten HDPE der D-Seite |
| 50 Gew.-% | des in Beispiel 1 genannten Copolymers der A-Seite |

**Beispiel 5**

Beispiel 1 wurde wiederholt. Die Rezeptur der Deckschicht der D-Seite wurde wie folgt modifiziert:

| | |
|---|---|
| 30 Gew.-% | des in Beispiel 1 genannten HDPE der D-Seite |
| 70 Gew.-% | des in Beispiel 1 genannten Copolymers der A-Seite |

**Beispiel 6**

Beispiel 1 wurde wiederholt. Die Rezeptur der Deckschicht der D-Seite wurde wie folgt modifiziert:

| | |
|---|---|
| 30 Gew.-% | des in Beispiel 1 genannten HDPE der D-Seite |
| 70 Gew.-% | des in Beispiel 1 genannten Terpolymers der D-Seite |

**Beispiel 7**

Beispiel 1 wurde wiederholt. Die Rezeptur der Deckschichten wurde wie folgt modifiziert:

Beide Deckschichten enthielten die gleiche Rezeptur wie in Beispiel 1 die Deckschicht der D-Seite.

**Beispiel 8**

Beispiel 2 wurde wiederholt. Beide Deckschichten enthielten die gleiche Rezeptur wie in Beispiel 2 die Deckschicht der D-Seite.

**Beispiel 9**

Beispiel 1 wurde wiederholt.
Die Rezeptur der D-Seite wurde wie folgt modifiziert:

| | |
|---|---|
| 4,2 Gew.-% | $CaCO_3$ des Typs ®Omyalithe 90T |
| 3,2 Gew.-% | $TiO_2$ |
| 46,3 Gew.-% | Terpolymer wie in der D-Seite von Beispiel 1 |
| 46,3 Gew.-% | HDPE wie in der D-Seite von Beispiel 1 |

**Beispiel 10**

Beispiel 9 wurde wiederholt. Beide Deckschichten enthielten die gleiche Rezeptur wie die D-Seite in Beispiel 9.

**Beispiel 11**

Beispiel 1 wurde wiederholt. Die Rezeptur der D-Seite wurde wie folgt modifiziert:

| | |
|---|---|
| 5,0 Gew.-% | $CaCO_3$ des Typs ®Omyalithe 90T |
| 47,5 Gew.-% | Terpolymer wie in der D-Seite von Beispiel 1 |
| 47,5 Gew.-% | HDPE wie in der D-Seite von Beispiel 1 |

**Beispiel 12**

Beispiel 11 wurde wiederholt. Beide Deckschichten enthielten die gleiche Rezeptur wie die D-Seite in Beispiel 11.

**Beispiel 13**

Beispiel 1 wurde wiederholt. Die Deckschichten entsprachen denen von Beispiel 1. Die Basisschicht wurde modifiziert:

| 95 Gew.-% | des in Beispiel 1 genannten Propylenhomopolymers |
|-----------|--------------------------------------------------|
| 5 Gew.-%  | des in Beispiel 1 genannten $CaCO_3$             |

**Beispiel 14**

Beispiel 1 wurde wiederholt. Die Deckschichten entsprachen denen von Beispiel 1. Die Basisschicht wurde modifiziert:

| 92 Gew.-% | des in Beispiel 1 genannten Propylenhomopolymers |
|-----------|--------------------------------------------------|
| 8 Gew.-%  | des in Beispiel 1 genannten $TiO_2$              |

**Vergleichsbeispiel**

Beispiel 1 wurde wiederholt, wobei jedoch in der Deckschicht D ein HDPE mit einem MFI von 1 g/10 min (50 N/190 °C), gemessen nach DIN 53 735, verwendet wurde.
Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\sigma$

Die Dichte wird nach DIN 53 479, Verfahren A, bestimmt.

Kristallisationsgrad $\alpha$

Der Kristallisationsgrad läßt sich durch folgende Beziehung ermitteln:

$$\alpha = \frac{\sigma - \sigma_{amorph}}{\sigma_{kristallin} - \sigma_{amorph}} \cdot 100\ \%$$

mit

$\sigma_{amorph} = 0{,}8549\ \text{g/cm}^3$
$\sigma_{kristallin} = 1{,}0005\ \text{g/cm}^3$

σ=    Dichte des eingesetzten HDPE-Typs

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 N/cm$^2$ (Gerät: Brugger Typ NDS, einseitig beheizte Siegelbacke) versiegelt. Die Siegelnahtfestigkeit wurde nach der T-Peel-Methode bestimmt.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Wasserdampfbarriere

Die Wasserdampfbarriere wird in Anlehnung an DIN 53 122 bei 23 °C und 85 % relativer Luftfeuchte gemessen und gibt die pro Quadratmeter und Tag durchgetretene Wassermenge in Gramm an.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als WG = RY + 3RZ - 3RX definiert.
WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

**Lichtdurchlässigkeit**

Die Lichtdurchlässigkeit wird in Anlehnung an ASTM-D 1003-77 gemessen.
In den nachstehenden Tabellen 1 und 2 sind die Eigenschaften und der Aufbau der Polypropylen-Mehrschichtfolien der Beispiele zusammengefaßt.

TABELLE 1

| Beispiel | Basisschicht | Deckschicht D | Deckschicht A |
|---|---|---|---|
| 1 | 92,6 Gew.-% PP<br>4,2 Gew.-% $CaCO_3$<br>3,2 Gew.-% $TiO_2$ | 50 Gew.-% Terpolymer<br>50 Gew.-% HDPE | 100 Gew.-% Copolymer |
| 2 | wie Beispiel 1 | 43,7 Gew.-% Terpolymer<br>43.7 Gew.-% HDPE<br>7.0 Gew.-% $TiO_2$<br>5.6 Gew.-% PP | 100 Gew.-% Copolymer |
| 3 | wie Beispiel 1 | 50 Gew.-% PP<br>50 Gew.-% HDPE | 100 Gew.-% Copolymer |
| 4 | wie Beispiel 1 | 50 Gew.-% Copolymer<br>50 Gew.-% HDPE | 100 Gew.-% Copolymer |
| 5 | wie Beispiel 1 | 70 Gew.-% Copolymer<br>30 Gew.-% HDPE | 100 Gew.-% Copolymer |
| 6 | wie Beispiel 1 | 70 Gew.-% Terpolymer<br>30 Gew.-% HDPE | 100 Gew.-% Copolymer |
| 7 | wie Beispiel 1 | wie Beispiel 1 | 50 Gew.-% Terpolymer<br>50 Gew.-% HDPE |
| 8 | wie Beispiel 1 | wie Beispiel 2 | 43,7 Gew.-% Terpolymer<br>43,7 Gew.-% HDPE<br>7.0 Gew.-% $TiO_2$<br>5,6 Gew.-% PP |
| 9 | wie Beispiel 1 | 46,3 Gew.-% Terpolymer<br>46.3 Gew.-% HDPE<br>4.2 Gew.-% $CaCO_3$<br>3.2 Gew.-% $TiO_2$ | 100 Gew.-.% Copolymer |
| 10 | wie Beispiel 1 | wie Beispiel 9 | 46.3 Gew.-% Terpolymer<br>3.2 Gew.-% $TiO_2$<br>46.3 Gew.-% HDPE<br>4.2 Gew.-% $CaCO_3$ |
| 11 | wie Beispiel 1 | 47.5 Gew.-% Terpolymer<br>47.5 Gew.-% HDPE<br>5.0 Gew.-% $CaCO_3$ | 100 Gew.-% Copolymer |
| 12 | wie Beispiel 1 | wie Beispiel 11 | 47.5 Gew.-% Terpolymer<br>47.5 Gew.-% HDPE<br>5.0 Gew.-% $CaCO_3$ |
| 13 | 95 Gew.-% PP<br>5 Gew.-% $CaCO_3$ | 50 Gew.-% Terpolymer<br>50 Gew.-% HDPE | 100 Gew.-% Copolymer |

TABELLE 1   (fortgesetzt)

| Beispiel | Basisschicht | Deckschicht D | Deckschicht A |
|---|---|---|---|
| 14 | 92 Gew.-% PP<br>8 Gew.-% $TiO_2$ | 50 Gew.-% Terpolymer<br>50 Gew.-% HDPE | 100 Gew.-% Copolymer |

## TABELLE 2

| | Glanz 85°, D-Seite | Reibungs-koeffizient | Oberflächenspan-nung (nach 6 Monaten Lagerung) | visuelle Beurteilung (mattes Erscheinungs-bild) | Siegelnahtfe-sigkeit D gegen A | Weißgrad A-Seite | Opazität A-Seite | Dichte | Druckbilder-scheinung |
|---|---|---|---|---|---|---|---|---|---|
| B1 | 38 | 0,3 | 39 | + + | 2,5 | 74 | 69 | 0,78 | + + |
| B2 | 34 | 0,4 | 38 | + + | 2,0 | 77 | 70 | 0,79 | + + |
| B3 | 41 | 0,5 | 39 | + + | - | 74 | 69 | 0,78 | + + |
| B4 | 43 | 0,5 | 39 | + + | 2,2 | 75 | 68 | 0,77 | + + |
| B5 | 45 | 0,4 | 39 | + + | 2,6 | 74 | 69 | 0,77 | + + |
| B6 | 41 | 0,3 | 39 | + + | 2,7 | 74 | 70 | 0,78 | + + |
| B7 | 38 | 0,4 | 39 | + + | 2,5 | 74 | 69 | 0,78 | + + |
| B8 | 34 | 0,4 | 38 | + + | 2,0 | 78 | 72 | 0,80 | + + |
| B9 | 31 | 0,4 | 39 | + + | 1,8 | 78 | 71 | 0,79 | + + |
| B10 | 31 | 0,4 | 39 | + + | 1,8 | 78 | 71 | 0,79 | + + |
| B11 | 28 | 0,5 | 39 | + + | 1,8 | 76 | 70 | 0,78 | + + |
| B12 | 28 | 0,3 | 39 | + + | 1,8 | 77 | 70 | 0,79 | + + |
| B13 | 38 | 0,4 | 39 | + + | 2,5 | 65 | 68 | 0,69 | + + |
| B14 | 38 | 0,5 | 39 | + + | 2,5 | 82 | 64 | 0,94 | + + |
| VB MFI <1 | ungleichmäßig zwischen 26 und 45 | 0,5 | 37 | ·· | | 74 | 69 | 0,78 | ·· |

B ≈ Beispiel; VB = Vergleichsbeispiel

## Patentansprüche

1. Opake Polypropylen-Mehrschichtfolie, welche eine Basisschicht, die im wesentlichen Polypropylen oder eine Polypropylenmischung und Füllstoffe enthält und mindestens eine Propylenhomopolymer-, Propylencopolymer oder eine Propylenterpolymerdeckschicht umfaßt, welche eine Mischung oder ein Blend zweier Komponenten I und II enthält, **dadurch gekennzeichnet, daß**
die Folie matt ist, und
das Gewichtsverhältnis der Komponenten I und II in einem Bereich von I:II = 30:70 und I:II = 70:30 liegt und
die Komponente I

ein Propylen homo polymeres oder
ein Copolymeres von

Ethylen und Propylen oder
Propylen und Butylen-1 oder

ein Terpolymeres von

Ethylen und Propylen und Butylen-1 oder

eine Mischung aus zwei oder mehreren der genannten Propylenhomo-, Propylenco- oder Propylenterpolymeren oder
ein Blend aus zwei oder mehreren der genannten Propylenhomo-, Propylenco- oder Propylenterpolymeren und

die Komponente II

ein HDPE mit einem MFI (50 N/190 C) von größer 1 bis 50 g/10 min, gemessen nach DIN 53 735, oder
ein Blend zweier Blendkomponenten A und B, wobei

die Blendkomponente A

ein HDPE mit einem MFI (50 N/190 C) von größer 1 bis 50 g/10 min, gemessen nach DIN 53 735, ist und

die Blendkomponente B

ein Propylenhomopolymeres oder
ein Copolymeres von

Ethylen und Propylen oder
Propylen und Butylen-1 oder

ein Terpolymeres von

Ethylen und Propylen und Butylen-1 oder

eine Mischung aus zwei oder mehreren der genannten Propylenhomo-, Propylenco- oder Propylenterpolymeren oder
ein Blend aus zwei oder mehreren der genannten Propylenhomo-, Propylenco- oder Propylenterpolymeren,

ist, und daß das Verhältnis der Blendkomponenten A und B im Bereich von A:B = 20:80 bis A:B = 80:20, vorzugsweise zwischen A:B = 40:60 und A:B = 60:40, liegt.

2. Polypropylen-Mehrschichtfolie nach Anspruch 1, **dadurch gekennzeichnet, daß**
die Komponente I im wesentlichen

ein Propylenhomopolymer oder
ein statistische Ethylen-Propylen-Copolymere mit

einem Ethylengehalt von 2 bis 10 Gew.-%, bevorzugt 5 bis 8 Gew.-%, oder

ein statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren
mit

einem Ethylengehalt von 0,1 bis 7 Gew.-% und
einem Propylengehalt von 50 bis 90 Gew.-% und
einem Butylen-1-Gehalt von 10 bis 40 Gew.-%,
jeweils bezogen auf das Gesamtgewicht des Polymerblends

ist und
die Blendkomponente B im wesentlichen

ein Propylenhomopolymer oder
ein statistische Ethylen-Propylen-Copolymere mit

einem Ethylengehalt von 2 bis 10 Gew.-%, bevorzugt 5 bis 8 Gew.-%, oder

ein statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,
jeweils bezogen auf das Gesamtgewicht des Terpolymeren, oder

ein Blend aus einem Ethylen-Propylen-Butylen-1-Terpolymeren und einem Propylen-Butylen-1-Copolymeren
mit

einem Ethylengehalt von 0,1 bis 7 Gew.-% und
einem Propylengehalt von 50 bis 90 Gew.-% und
einem Butylen-1-Gehalt von 10 bis 40 Gew.-%,
jeweils bezogen auf das Gesamtgewicht des Polymerblends

ist.

3. Polypropylen-Mehrschichtfolie nach Anspruch 1 und/oder 2, **dadurch gekennzeichnet, daß** das HDPE einen MFI (50 N/190 C) von 5 bis 45 g/10 min (gemessen nach DIN 53 735), eine Viskositätszähl von 100 bis 450 cm$^3$/g (gemessen nach DIN 53 728, Teil 4), eine Dichte von 0,93 bis 0,97 g/cm$^3$ (gemessen nach DIN 53 479, Verfahren A), einen Kristallisationsgrad von 35 bis 80 % und einen Schmelzpunkt von 120 bis 150 C nach DSC-Messung aufweist.

4. Polypropylen-Mehrschichtfolie nach einem oder mehreren der Ansprüche 1 bis 3, **dadurch gekennzeichnet, daß** das Blend einen Schmelzflußindex von 1,5 bis 12 g/10 min, vorzugsweise 2,5 bis 6 g/10 min, (230 C, 21,6 N Belastung) hat.

5. Polypropylen-Mehrschichtfolie nach einem oder mehreren der Ansprüche 1 bis 4, **dadurch gekennzeichnet, daß** das Propylenpolymere der Basisschicht einen Schmelzpunkt von mindestens 140 °C besitzt und der Schmelzflußindex im Bereich von 0,5 bis 15 g/10 min liegt.

6. Polypropylen-Mehrschichtfolie nach einem oder mehreren der Ansprüche 1 bis 5, **dadurch gekennzeichnet, daß** die Basisschicht als Füllstoffe vakuoleniniziierende feste Teilchen, vorzugsweise $CaCO_3$ oder unverträgliche Polymere, und/oder Pigmente, vorzugsweise $TiO_2$, enthält.

7. Polypropylen-Mehrschichtfolie nach Anspruch 6, **dadurch gekennzeichnet, daß** die festen Teilchen einen mittleren Teilchendurchmesser von ≥1 µm und die Pigmente einen mittleren Teilchendurchmesser von <1 µm aufweisen.

8. Polypropylen-Mehrschichtfolie nach einem oder mehreren der Ansprüche 1 bis 7, **dadurch gekennzeichnet, daß** die Basisschicht als Füllstoffe nur Pigmente, vorzugsweise $TiO_2$, in einer Menge von 2 bis 25 Gew.-% enthält und die Dichte der Folie ≥0,9 g/cm$^3$ beträgt.

9. Polypropylen-Mehrschichtfolie nach einem oder mehreren der Ansprüche 1 bis 8, **dadurch gekennzeichnet, daß** die Basisschicht als Füllstoffe nur feste Teilchen, vorzugsweise $CaCO_3$, in einer Menge von 1 bis 25 Gew.-% enthält und die Dichte der Folie 0,4 bis 0,85 g/cm$^3$ beträgt.

10. Polypropylen-Mehrschichtfolie nach Anspruch 9, **dadurch gekennzeichnet, daß** die festen Teilchen in der Basisschicht in einer Menge von 2 bis 5 Gew.-% enthalten sind und die Dichte der Folie 0,7 bis 0,85 g/cm$^3$ beträgt.

11. Polypropylen-Mehrschichtfolie nach Anspruch 10, **dadurch gekennzeichnet, daß** in der Basisschicht die festen Teilchen in einer Menge von 9 bis 14 Gew.-% enthalten sind und die Dichte der Folie 0,4 bis 0,7 g/cm$^3$ beträgt.

12. Polypropylen-Mehrschichtfolie nach einem oder mehreren der Ansprüche 1 bis 7, **dadurch gekennzeichnet, daß** die Basisschicht als Füllstoffe feste Teilchen, vorzugsweise $CaCO_3$, in einer Menge von 1 bis 10 Gew.-% und Pigmente, vorzugsweise $TiO_2$, in einer Menge von 1 bis 7 Gew.-% enthält und die Dichte der Folie 0,6 bis 0,85 g/cm$^3$ beträgt.

13. Polypropylen-Mehrschichtfolie nach einem oder mehreren der Ansprüche 1 bis 12, **dadurch gekennzeichnet, daß** die Deckschicht feste Teilchen, vorzugsweise $CaCO_3$ oder $SiO_2$, in einer Menge von 1 bis 15 Gew.-% und/oder Pigmente, vorzugsweise $TiO_2$, in einer Menge von 1 bis 15 Gew.-% enthält und daß die Deckschicht im wesentlichen vakuolenfrei ist.

14. Polypropylen-Mehrschichtfolie nach einem oder mehreren der Ansprüche 1 bis 12, **dadurch gekennzeichnet, daß** die Deckschicht feste Teilchen, vorzugsweise $CaCO_3$ oder $SiO_2$, in einer Menge von 1 bis 10 Gew.-% und Pigmente, vorzugsweise $TiO_2$, in einer Menge von 1 bis 7 Gew.-% enthält.

15. Polypropylen-Mehrschichtfolie nach einem oder mehreren der Ansprüche 1 bis 14, **dadurch gekennzeichnet, daß** die Deckschicht und/oder die Basisschicht als Additive Antistatika und/oder Antiblockmittel und/oder Gleitmittel und/oder Stabilisatoren und/oder Neutralisationsmittel enthält/enthalten.

16. Polypropylen-Mehrschichtfolie nach Anspruch 1, **dadurch gekennzeichnet, daß** sie bei einem Meßwinkel von 85° einen Glanz von kleiner 80, vorzugsweise 10 bis 65, auf der/den beiden matten Seite/n aufweist, gemessen nach ASTM-D 523-78.

17. Verfahren zur Herstellung der Polypropylen-Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 20 und 100 °C liegt, abgezogen wird, die Folie biaxial gestreckt wird mit einem Längsstreckverhältnis von 4:1 bis 7:1 und einem Querstreckverhältnis von 8:1 bis 11:1, die biaxial gestreckte Folie thermofixiert, gegebenenfalls coronabehandelt und anschließend aufgewickelt wird, **dadurch gekennzeichnet, daß** die Längsstreckung der Folie bei 120 bis 150 °C und die Querstreckung bei 155 bis 190 °C durchgeführt wird und daß die Folie mindestens eine matte Oberfläche aufweist.

18. Verwendung der Polypropylen-Mehrschichtfolie nach einem oder mehreren der Ansprüche 1 bis 16 als Verpackungsfolie, vorzugsweise bedruckte Verpackungsfolie, als Trägerfolie für eine gegebenenfalls partielle Klebeschicht, als Trägerfolie für wäßrige Barrierebeschichtungssysteme, zur Herstellung von Laminaten, vorzugsweise mit Papier, Pappe, Metallen, metallisierten Kunststoffolien oder Kunststoffolien, als Papierersatz im In-mould-Labelling-Prozeß oder zur Herstellung von Deckelverschlüssen.

**19.** Laminate, enthaltend eine Polypropylen-Mehrschichtfolie nach einern oder mehreren der Ansprüche 1 bis 16.

**20.** Verpackungen, enthaltend eine Polypropylen-Mehrschichtfolie nach einem oder mehreren der Ansprüche 1 bis 16.

**21.** Beschichtete Barrieresysteme, enthaltend eine Polypropylen-Mehrschichtfolie nach einem oder mehreren der Ansprüche 1 bis 16.

**22.** Deckelverschluß, enthaltend eine Polypropylen-Mehrschichtfolie nach einem oder mehreren der Ansprüche 1 bis 16.

**23.** Etikett, umfassend eine Polypropylen-Mehrschichtfolie nach einem oder mehreren der Ansprüche 1 bis 16.

**Claims**

**1.** Opaque, multilayer polypropylene film which comprises a base layer which essentially comprises polypropylene or a polypropylene mixture and fillers, and at least one propylene homopolymer, propylene copolymer or propylene terpolymer top layer which comprises a mixture or blend of two components I and II, **characterized in that** the film is matt, and the weight ratio of components I and II is in the range from I:II = 30:70 and I:II = 70:30 and component I is

a propylene homopolymer or a copolymer of

ethylene and propylene or propylene and 1-butylene or

a terpolymer of

ethylene and propylene and 1-butylene or

a mixture of two or more of the said propylene homopolymers, propylene copolymers and propylene terpolymers or a blend of two or more of the said propylene homopolymers, propylene copolymers and propylene terpolymers and

component II is

an HDPE having an MFI (50 N/190°C) of from greater than 1 to 50 g/10 min, measured in accordance with DIN 53 735, or a blend of two blend components A and B, where

blend component A is

an HDPE having an MFI (50 N/190°C) of from greater than 1 to 50 g/10 min, measured in accordance with DIN 53 735 and

blend component B is

a propylene homopolymer or a copolymer of

ethylene and propylene or

EP 0 619 183 B1

propylene and 1-butylene or

a terpolymer of

ethylene and propylene and 1-butylene or

a mixture of two or more of the said propylene homopolymers, propylene copolymers and propylene terpolymers or
a blend of two or more of the said propylene homopolymers, propylene copolymers and propylene terpolymers,

and the ratio of the blend components A and B is in the range from A:B = 20:80 to A:B = 80:20, preferably between A:B = 40:60 and A:B = 60:40.

2.  Multilayer polypropylene film according to Claim 1, **characterized in that**
    component I is essentially

    a propylene homopolymer or
    a random ethylene-propylene copolymer having

    an ethylene content of from 2 to 10% by weight, preferably from 5 to 8% by weight, or

    a random propylene-1-butylene copolymer having

    a butylene content of from 4 to 25% by weight, preferably from 10 to 20% by weight,

    in each case based on the total weight of the copolymer, or
    a random ethylene-propylene-1-butylene terpolymer having

    an ethylene content of from 1 to 10% by weight, preferably from 2 to 6% by weight, and
    a 1-butylene content of from 3 to 20% by weight, preferably from 8 to 10% by weight,
    in each case based on the total weight of the terpolymer, or

    a blend of an ethylene-propylene-1-butylene terpolymer and a propylene-1-butylene copolymer having

    an ethylene content of from 0.1 to 7% by weight and
    a propylene content of from 50 to 90% by weight and
    a 1-butylene content of from 10 to 40% by weight,
    in each case based on the total weight of the polymer blend,

    and
    blend component B is essentially

    a propylene homopolymer or
    a random ethylene-propylene copolymer having

    an ethylene content of from 2 to 10% by weight, preferably from 5 to 8% by weight, or

    a random propylene-1-butylene copolymer having

    a butylene content of from 4 to 25% by weight, preferably from 10 to 20% by weight,

    in each case based on the total weight of the copolymer, or
    a random ethylene-propylene-1-butylene terpolymer having

    an ethylene content of from 1 to 10% by weight, preferably from 2 to 6% by weight, and
    a 1-butylene content of from 3 to 20% by weight, preferably from 8 to 10% by weight,
    in each case based on the total weight of the terpolymer, or

a blend of an ethylene-propylene-1-butylene terpolymer and a propylene-1-butylene copolymer having

an ethylene content of from 0.1 to 7% by weight and
a propylene content of from 50 to 90% by weight and
a 1-butylene content of from 10 to 40% by weight,
in each case based on the total weight of the polymer blend.

3. Multilayer polypropylene film according to Claim 1 and/or 2, **characterized in that** the HDPE has an MFI (50 N/190°C) of from 5 to 45 g/10 min (measured in accordance with DIN 53 735), a viscosity index of from 100 to 450 $cm^3$/g (measured in accordance with DIN 53 728, Part 4), a density of from 0.93 to 0.97 g/$cm^3$ (measured in accordance with DIN 53 479, Method A), a degree of crystallization of from 35 to 80% and a melting point of from 120° to 150°C according to DSC measurement.

4. Multilayer polypropylene film according to one or more of Claims 1 to 3, **characterized in that** the blend has a melt flow index of from 1.5 to 12 g/10 min, preferably of from 2.5 to 6 g/10 min (230°C, 21.6 N load).

5. Multilayer polypropylene film according to one or more of Claims 1 to 4, **characterized in that** the propylene polymer of the base layer has a melting point of at least 140°C and the melt flow index is in the range from 0.5 to 15 g/10 min.

6. Multilayer polypropylene film according to one or more of Claims 1 to 5, **characterized in that** the base layer comprises, as fillers, vacuole-initiating solid particles, preferably $CaCO_3$, or incompatible polymers, and/or pigments, preferably $TiO_2$.

7. Multilayer polypropylene film according to Claim 6, **characterized in that** the solid particles have a mean particle diameter of □ 1 μm and the pigments have a mean particle diameter of < 1 μm.

8. Multilayer polypropylene film according to one or more of Claims 1 to 7, **characterized in that** the base layer comprises, as fillers, only pigments, preferably $TiO_2$, in an amount of from 2 to 25% by weight and the density of the film is □ 0.9 g/$cm^3$.

9. Multilayer polypropylene film according to one or more of Claims 1 to 8, **characterized in that** the base layer comprises, as fillers, only solid particles, preferably $CaCO_3$, in an amount of from 1 to 25% by weight and the density of the film is from 0.4 to 0.85 g/$cm^3$.

10. Multilayer polypropylene film according to Claim 9, **characterized in that** the solid particles are present in the base layer in an amount of from 2 to 5% by weight and the density of the film is from 0.7 to 0.85 g/$cm^3$.

11. Multilayer polypropylene film according to Claim 10, **characterized in that** the solid particles are present in the base layer in an amount of from 9 to 14% by weight and the density of the film is from 0.4 to 0.7 g/$cm^3$.

12. Multilayer polypropylene film according to one or more of Claims 1 to 7, **characterized in that** the base layer comprises, as fillers, solid particles, preferably $CaCO_3$, in an amount of from 1 to 10% by weight and pigments, preferably $TiO_2$, in an amount of from 1 to 7% by weight and the density of the film is from 0.6 to 0.85 g/$cm^3$.

13. Multilayer polypropylene film according to one or more of Claims 1 to 12, **characterized in that** the top layer comprises solid particles, preferably $CaCO_3$ or $SiO_2$, in an amount of from 1 to 15% by weight and/or pigments, preferably $TiO_2$, in an amount of from 1 to 15% by weight and **in that** the top layer is essentially vacuole-free.

14. Multilayer polypropylene film according to one or more of Claims 1 to 12, **characterized in that** the top layer comprises solid particles, preferably $CaCO_3$ or $SiO_2$, in an amount of from 1 to 10% by weight and pigments, preferably $TiO_2$, in an amount of from 1 to 7% by weight.

15. Multilayer polypropylene film according to one or more of Claims 1 to 14, **characterized in that** the top layer and/or the base layer comprise(s), as additives, antistatics and/or antiblocking agents and/or lubricants and/or stabilizers and/or neutralizers.

16. Multilayer polypropylene film according to Claim 1, **characterized in that** the said film has a gloss of less than 80, preferably from 10 to 65, on the/both matt side(s), measured in accordance with ASTM-D 523-78, at a measurement angle of 85°.

17. Process for the production of the multilayer polypropylene film according to Claim 1, in which the melts corresponding to the individual layers of the film are extruded through a flat-film die, the coextruded film is taken off over a take-off roll whose temperature is between 20 and 100°C, the film is biaxially stretched with a longitudinal stretching ratio of from 4:1 to 7:1 and a transverse stretching ratio of from 8:1 to 11:1, the biaxially stretched film is heat-set, if desired corona-treated and subsequently wound up, **characterized in that** the longitudinal stretching of the film is carried out at from 120 to 150°C and the transverse stretching is carried out at from 155 to 190°C and **in that** the film has at least one matt surface.

18. Use of the multilayer polypropylene film according to one or more of Claims 1 to 16 as packaging film, preferably printed packaging film, as support film for an optionally partially adhesive layer, as support film for aqueous barrier coating systems, for the production of laminates, preferably with paper, cardboard, metals, metallized plastic films or plastic films, as paper substitute in the in-mould labeling process or for the production of lid closures.

19. Laminates comprising a multilayer polypropylene film according to one or more of Claims 1 to 16.

20. Packaging comprising a multilayer polypropylene film according to one or more of Claims 1 to 16.

21. Coated barrier systems comprising a multilayer polypropylene film according to one or more of Claims 1 to 16.

22. Lid closure comprising a multilayer polypropylene film according to one or more of Claims 1 to 16.

23. Label comprising a multilayer polypropylene film according to one or more of Claims 1 to 16.


**Revendications**

1. Film multicouches opaque de polypropylène, lequel comprend une couche de base qui contient pour l'essentiel du polypropylène ou un mélange de polypropylène et des matières de charge et au moins une couche de surface en homopolymère de propylène, en copolymère de propylène ou en terpolymère de propylène, laquelle contient un mélange ou un blend de deux composants I et II, **caractérisé en ce que**
   le film est mat et
   le rapport pondéral des composants 1 et 11 se situe dans une plage de I à II = 30 à 70 et I à II = 70 à 3 0 et
   le composant I est

      un homopolymère de propylène ou
      un copolymère

         d'éthylène et de propylène ou
         de propylène et de butylène-1 ou

      un terpolymère

         d'éthylène et de propylène et de butylène-1 ou

      un mélange de deux ou de plusieurs des homopolymères de propylène, des copolymères de propylène ou des terpolymères de propylène cités ou
      un blend de deux ou de plusieurs des homopolymères de propylène, des copolymères de propylène ou des terpolymères de propylène cités et

   le composant II est

      un PEHD avec un MFI (50 N/190 °C) supérieur à 1 à 50 g/10 min, mesuré selon DIN 53 735 ou
      un blend de deux composants de blend A et B,

         le composant de blend A étant

un PEHD avec un MFI (50 N/390 °C) supérieur à 1 à 50 g/10 min, mesuré selon DIN 53 735 et

le composant de blend B

un homopolymère de propylène ou
un copolymère

d'éthylène et de propylène ou
de propylène et de butylène-1 ou

un terpolymère

d'éthylène et de propylène et de butylène-1 ou

un mélange de deux ou de plusieurs des homopolymères de propylène, des copolymères de propylène ou des terpolymères de propylène cités ou
un blend de deux ou de plusieurs des homopolymères de propylène, des copolymères de propylène ou des terpolymères de propylène cités et
le rapport des composants du blend A et B se situe dans une plage de A à B = 20 à 80 à A à B = 80 à 20, de préférence de A à B = 40 à 60 à A à B = 60 à 40.

2.  Film multicouches de polypropylène selon la revendication 1, **caractérisé en ce que** le composant I est pour l'essentiel

un homopolymère de propylène ou
un copolymère d'éthylène-propylène statistique avec

une teneur en éthylène de 2 à 10 % en poids, de préférence de 5 à 8 % en poids ou

un copolymère de propylène-butylène-1 statistique avec

une teneur en butylène de 4 à 25 % en poids , de préférence de 10 à 20 % en poids,
rapporté respectivement au poids total du copolymère, ou

un terpolymère d'éthylène-propylène-butylène-1 statistique avec

une teneur en éthylène de 1 à 10 % en poids, de préférence de 2 à 6 % en poids et
une teneur en butylène-1 de 3 à 20 %, de préférence de 8 à 10 %, rapporté respectivement au poids total du terpolymère, ou

un blend d'un terpolymère d'éthylène-propylène butylène-1 et d'un copolymère de propylène-butylène-1 avec

une teneur en éthylène de 0,1 à 7 % en poids et
une teneur en propylène de 50 à 90 % en poids et
une teneur en butylène-1 de 10 à 40 % en poids
rapporté respectivement au poids total du blend de polymère et

le composant B de blend est pour l'essentiel

un homopolymère de propylène ou
un copolymère d'éthylène-propylène statistique avec

une teneur en éthylène de 2 à 10 % en poids, de préférence de 5 à 8 % en poids ou

un copolymère de propylène-butylène-1 statistique avec

une teneur en butylène de 4 à 25 %, de préférence de 10 à 20 %,
rapporté respectivement au poids total du copolymère ou

un terpolymère d'éthylène-propylène-butylène-1 statistique avec

une teneur en éthylène de 1 à 10 % en poids, de préférence de 2 à 6 % en poids et
une teneur en butylène- 1 de 3 à 20 % en poids, de préférence de 8 à 10 % en poids,
rapporté respectivement au poids total du terpolymère ou

un blend d'un terpolymère d'éthylène-propylène-butylène-1 et d'un copolymère de propylène-butylène-1 avec

une teneur en éthylène de 0,1 à 7 % en poids et
une teneur en propylène de 50 à 90 % en poids et
une teneur en butylène-1 de 10 à 40 % en poids,
rapporté respectivement au poids total du blend de polymère.

3. Film multicouches de polypropylène selon l'une et/ou l'autre des revendications 1 et 2, **caractérisé en ce que** le PEHD présente un MFI (50 N/190 °C) de 5 à 45 g/10 min (mesuré selon DIN 53 735), un indice de viscosité de 100 à 450 $cm^3$/g (mesuré selon DIN 53 728, Partie 4), une densité de 0,93 à 0,97 $g/cm^3$ (mesurée selon DIN 53 479, méthode A), un degré de cristallisation de 35 à 80 % et un point de fusion de 120 à 150 °C d'après une mesure DSC.

4. Film multicouches de polypropylène selon l'une ou plusieurs des revendications 1 à 3, **caractérisé en ce que** le blend a un indice de fluidité à chaud de 1,5 à 12 g/10 min, de préférence de 2,5 à 6 g/10 min (230 °C, contrainte de 21,6 N).

5. Film multicouches de polypropylène selon l'une ou plusieurs des revendications 1 à 4, **caractérisé en ce que** le polymère de propylène de la couche de base possède un point de fusion d'au moins 140 °C et un indice de fluidité à chaud qui se situe dans une plage de 0,5 à 15 g/10 min.

6. Film multicouches de polypropylène selon l'une ou plusieurs des revendications 1 à 5, **caractérisé en ce que** la couche de base contient comme matières de charge des particules solides qui initient des vacuoles, de préférence du $CaCO_3$ ou des polymères incompatibles et/ou des pigments, de préférence du $TiO_2$.

7. Film multicouches de polypropylène selon la revendications 6, **caractérisé en ce que** les particules solides font état d'un diamètre moyen de particule de $\geq 1$ µm et les pigments d'un diamètre moyen de particule de $< 1$ µm.

8. Film multicouches de polypropylène selon l'une ou plusieurs des revendications 1 à 7, **caractérisé en ce que** la couche de base ne contient comme matières de charge que des pigments, de préférence du $TiO_2$, dans une quantité de 2 à 25 % en poids, et la densité du film s'élève à $\geq 0,9$ $g/cm^3$.

9. Film multicouches de polypropylène selon l'une ou plusieurs des revendications 1 à 8, **caractérisé en ce que** la couche de base ne contient comme matières de charge que des particules solides, de préférence du $CaCO_3$, dans une quantité de 1 à 25 % en poids, et la densité du film s'élève à 0,4 à 0,85 $g/cm^3$.

10. Film multicouches de polypropylène selon la revendications 9, **caractérisé en ce que** les particules solides sont contenues dans la couche de base dans une quantité de 2 à 5 % en poids et la densité du film s'élève à 0,7 à 0,85 $g/cm^3$.

11. Film multicouches de polypropylène selon la revendications 10, **caractérisé en ce que** les particules solides sont contenues dans la couche de base dans une quantité de 9 à 14 % en poids et la densité du film s'élève à 0,4 à 0,7 $g/cm^3$.

12. Film multicouches de polypropylène selon l'une ou plusieurs des revendications 1 à 7, **caractérisé en ce que** la couche de base ne contient comme matières de charge que des particules solides, de préférence du CaC03, dans une quantité de 1 à 10 % en poids et des pigments, de préférence de $TiO_2$, dans une quantité de 1 à 7 % en poids, et la densité du film s'élève à 0,6 à 0,85 $g/cm^3$.

13. Film multicouches de polypropylène selon l'une ou plusieurs des revendications 1 à 12, **caractérisé en ce que** la couche de surface contient des particules solides, de préférence de $CaCO_3$ ou de $SiO_2$, dans une quantité de 1 à 15 % en poids et/ou des pigments, de préférence de $TiO_2$, dans une quantité de 1 à 15 % en poids et que la couche de surface est pour l'essentiel exempte de vacuoles.

**14.** Film multicouches de polypropylène selon l'une ou plusieurs des revendications 1 à 12, **caractérisé en ce que** la couche de surface contient des particules solides, de préférence de $CaCO_3$ ou de $SiO_2$, dans une quantité de 1 à 10 % en poids et des pigments, de préférence de $TiO_2$, dans une quantité de 1 à 7 % en poids.

**15.** Film multicouches de polypropylène selon l'une ou plusieurs des revendications 1 à 14, **caractérisé en ce que** la couche de surface et/ou la couche de base contiennent comme additifs des antistatiques et/ou des agents anti blocking et/ou des agents glissants et/ou des stabilisateurs et/ou des agents de neutralisation.

**16.** Film multicouches de polypropylène selon la revendication 1, **caractérisé en ce que** ledit film fait état à un angle de mesure de 85° d'un brillant inférieur à 80, de préférence de 10 à 65, sur la face / les deux faces mate(s), mesuré selon ASTM-D 523-78.

**17.** Procédé destiné à la fabrication du film multicouches en polypropylène selon la revendication 1, avec lequel les matières fondues correspondant aux différentes couches du film sont coextrudées à travers une filière plate, le film coextrudé est débité sur un rouleau débiteur dont la température se situe entre 20 et 100 °C, le film est étiré biaxialement dans un rapport d'étirage longitudinal de 4 à 1 jusqu'à 7 à 1 et un rapport d'étirage transversal de 8 à 1 jusqu'à 11 à 1, le film biaxialement étiré est thermofixé, le cas échéant soumis à un traitement corona et ensuite bobiné, **caractérisé en ce que** l'étirage longitudinal du film est effectué à une température de 120 à 150 °C et l'étirage transversal à une température de 155 à 190 °C et que le film fait état d'au moins une surface mate.

**18.** Utilisation du film multicouches de polypropylène selon l'une ou plusieurs des revendications 1 à 16 comme film d'emballage, de préférence comme film d'emballage imprimé, en tant que film-support pour une couche le cas échéant partiellement adhésive, comme film-support pour des systèmes d'enduction faisant barrière dans des milieux aqueux, pour la fabrication de stratifiés, de préférence avec du papier, du carton, des métaux, des films plastiques métallisés ou des films plastiques, comme substitut du papier dans le procédé de fabrication des étiquettes dans le moule ou pour la fabrication de fermetures de couvercles.

**19.** Stratifiés contenant un film multicouches de polypropylène selon l'une ou plusieurs des revendications 1 à 16.

**20.** Emballages contenant un film multicouches de polypropylène selon l'une ou plusieurs des revendications 1 à 16.

**21.** Systèmes avec enduction faisant barrière, contenant un film multicouches de polypropylène selon l'une ou plusieurs des revendications 1 à 16.

**22.** Fermeture de couvercle contenant un film multicouches de polypropylène selon l'une ou plusieurs des revendications 1 à 16.

**23.** Étiquette comprenant un film multicouches de polypropylène selon l'une ou plusieurs des revendications 1 à 16.